# EUROPEAN PATENT SPECIFICATION

(11) **EP 2 753 824 B1**
(45) Date of publication and mention of the grant of the patent: **06.01.2016**
(21) Application number: 12759081.8
(22) Date of filing: 06.09.2012
(51) Int. Cl.: F03B 13/14, F03B 13/24, E02B 3/06, E02B 9/08

(54) **CAISSON BREAKWATER MODULE**
SENKKASTEN-WELLENBRECHERMODUL
MODULE DE BRISE-LAMES EN CAISSON

(30) Priority: 06.09.2011 EP 11382285
(43) Date of publication of application: 16.07.2014
(73) Proprietor: Electric Waves, S.L., 08150 Parets Del Vallès (ES)
(72) Inventor: TOUS I CANALS, Xavier, E-08195 Sant Cugat Del Vallès (ES); PASTOR I AUGUET, Guillem, E-08290 Cerdanyola Del Vallès (ES)
(74) Representative: ZBM Patents - Zea, Barlocci & Markvardsen
(86) International application number: PCT/EP2012/067400
(87) International publication number: WO 2013/034636

(56) References cited:
- FR-A1- 2 950 907
- GB-A- 2 108 590
- GB-A- 2 418 960
- JP-A- 10 246 171
- JP-A- 58 187 586
- JP-A- 60 215 907
- KR-A- 20090 096 586
- KR-B1- 100 748 369
- US-A1- 2010 038 912

## Description

The present invention relates to a caisson breakwater, and more particularly relates to a caisson breakwater module incorporating an Oscillating Water Column (OWC). The present invention further relates to a breakwater structure comprising a plurality of such modules and to a lid particularly suitable for such a module.

### BACKGROUND ART

Breakwater structures are structures that generally serve to reduce the erosion of a coast by reducing the intensity of wave actions. They may be built at or near the coast and may be used as a protective border of a harbour or port. It is also known to use them offshore (i.e. further away from the coast), with the same scope of protecting the coast e.g. a beach.

Breakwater structures may be built with one end linked to the coast or completely separated from the coast. It is known to provide floating breakwater structures or to construct them on a foundation on the sea bed. Breakwaters of different types are known: on the one hand, rubble mound breakwaters (using e.g. sloped mounds of e.g. stones to dissipate wave energy) and on the other hand caisson breakwaters (using caissons to substantially deflect waves).

Caisson breakwaters may comprise (reinforced) concrete caissons. The caissons may be manufactured in dry docks, towed and sunk by filling one or more cells in the caissons with sand, gravel or concrete, or any other kind of ballast.

Furthermore, Oscillating Water Column wave power plants are known. In these wave power plants, the rising and falling water surface within a chamber is used to produce an oscillating air current in which a turbine is placed. In general, a so-called Wells turbine is used to take advantage of the air flow in two directions. A generator may be operationally connected to the turbine in order to generate elctricity.

EP 1 518 052 discloses an oscillating water column wave energy converter that is incorporated into a caisson breakwater. Another example of a combined breakwater structure with OWC is shown in WO 2010/067177. JP10246171 describes an OWC that comprises a de-energizing chamber between the water and a pipe leading towards an air turbine. GB 2 108 590 describes a liquid wave energy absorber built as a concrete structure having a base provided with ballast compartments, side walls and a rear wall extending upwards from the base, a roof, and a transverse wall extending between the side walls and down from the roof. The transverse wall terminates a distance above the base to form an opening. Another relevant prior art document is KR100748369 B1.

Even though these particular prior art systems offer an advantageous combination of coastal protection and electricity generation from renewable energy, the prior art designs suffer from various drawbacks. In general, their designs do not take cost-efficiency and economic viability into account.

It is an object of the present invention to provide an improved breakwater structure.

### SUMMARY OF THE INVENTION

In a first aspect, a caisson breakwater module according to claim 1 is provided having an upwave and a downwave side and incorporating an oscillating water column. The caisson breakwater module comprises a base installed on the sea bed and a lid adapted to be positioned on top of said base. The base defines a water inlet on the upwave side and further defines a water oscillation chamber. The lid defines a breakwater section on the upwave side, a turbine chamber, one or more air ducts connected with said turbine chamber and an additional substantially sealed chamber.

A modular built-up of a caisson breakwater incorporating an OWC is thus provided. The separation in a base that is installed on (a foundation) in the sea bed, and a lid that is positioned on top of the base, makes separate manufacture and installation possible. The base may be manufactured in a dry dock, towed onto sea and subsequently sunk in place. The lid may be manufactured separately, e.g. comprising a plurality of moulded concrete sections, and may be transported separately.

Since the OWC is incorporated in a breakwater structure, installation and maintenance of the OWC may be easier and cheaper than in a floating structure. Additionally, a substantially sealed chamber is incorporated in the lid. Electrical cables and converters may be installed in the sealed chamber, such that they are protected from sea water and other environmental influences. And no submarine cables are needed for transporting electricity to the shore, since a direct connection to shore is available through the breakwater structure. The provided design may thus reduce life-cycle-cost of the breakwater / OWC. The electricity generated by the OWC may be used locally in e.g. a harbour located on the downwave side of the breakwater. A further aspect of being able to provide a converter system in the sealed chamber is that suitable AC current may be generated and directly injected into the electrical grid.

The lid further defines an air chamber below the turbine chamber and comprises an opening for allowing communication between the water oscillation chamber and the air chamber. A valve system may be foreseen to selectively close off communication between the water oscillation chamber and the air chamber. During high waves and/or storms, the turbine and related electrical systems may be protected by closing such a valve.

In some embodiments, the sealed chamber may be located substantially behind the breakwater section. It is located between the air chamber and the breakwater section. According to this design, the space located behind the breakwater section may be advantageously used to house e.g. a converter.

In some embodiments, the one or more air ducts may have an opening on the upwave side. According to this feature, any noise created by the turbine and the moving water column and air column is directed towards the upwave side and away from e.g. a port and residencies located on the coast. Optionally, the one or more air ducts may also comprise a valve for selectively closing off the air duct. The OWC may thus be protected during high waves or storms.

In some embodiments, the lid may comprise a plurality of moulded concrete sections. By dividing the lid in prefabricated sections, the overall installation, and particularly the transport of the lid to the site may be facilitated.

In some implementations, one or more modules may comprise a wind turbine and/or photovoltaic panels. The electricity generated in a breakwater structure may thus be increased. It thus becomes possible to provide a breakwater around a port that can generate enough electricity for (almost) all electricity needs in the port. In some implementations, a module may further comprise a desalination plant. The energy generated may be used locally in the desalination plant. Desalinated water may be used either in a port or harbour, or in a village or city located at the coast.

In another aspect, a lid suitable for use in a module as substantially hereinbefore described is provided.

In yet another aspect, a breakwater comprising a plurality of modules substantially as hereinbefore described is provided. A breakwater may be provided that comprises only modules such as hereinbefore described. However, in other implementations, a number of such modules may be attached to an already existing breakwater in order to e.g. improve electricity provision.

Additional objects, advantages and features of embodiments of the invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Figures 1a - 1d show various views of a module according to a first embodiment of the present invention;
Figures 2a - 2b show different views of a module according to a second embodiment of the present invention;
Figures 3a - 3c illustrate various views of a module according to a third embodiment of the present invention;
Figures 4a - 4d illustrate various views of a module according to a fourth embodiment of the present invention;
Figure 5 illustrates an example of a module according to an embodiment of the present invention comprising various moulded sections; and
Figures 6a - 6c illustrate examples of implementations of a plurality of modules according to different embodiments of the present invention.

### DETAILED DESCRIPTION OF EMBODIMENTS

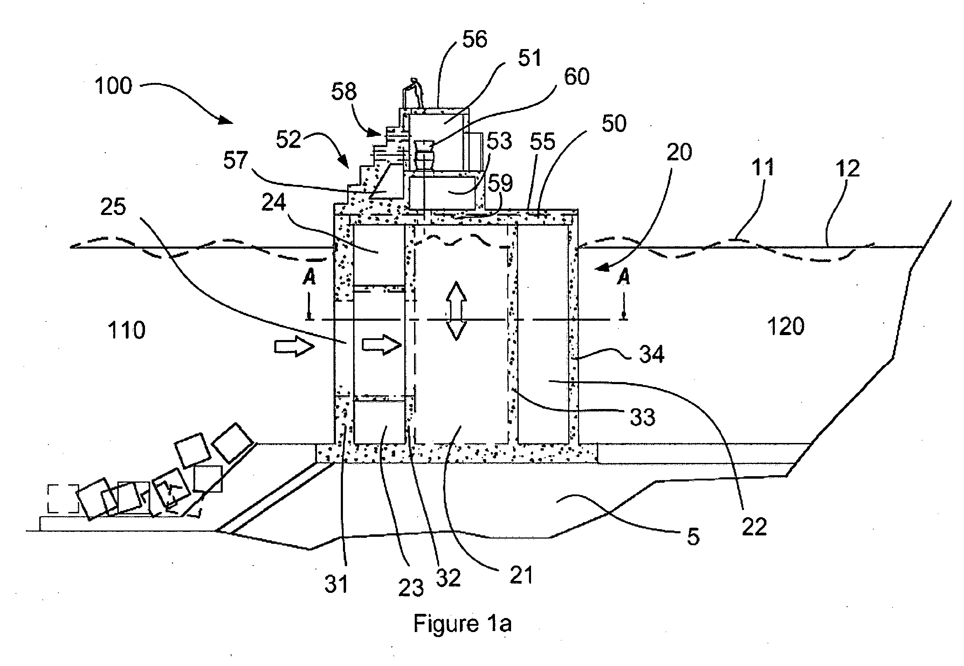

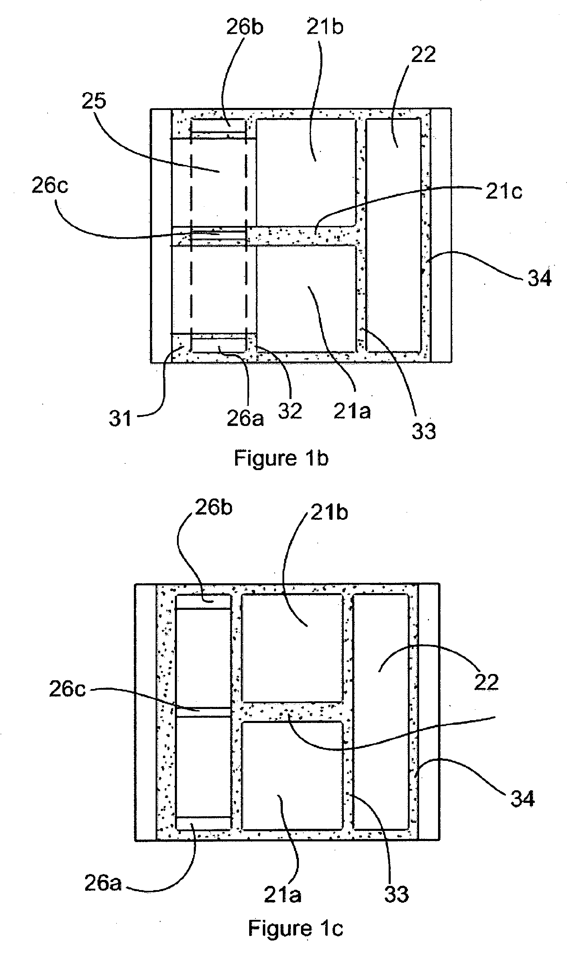

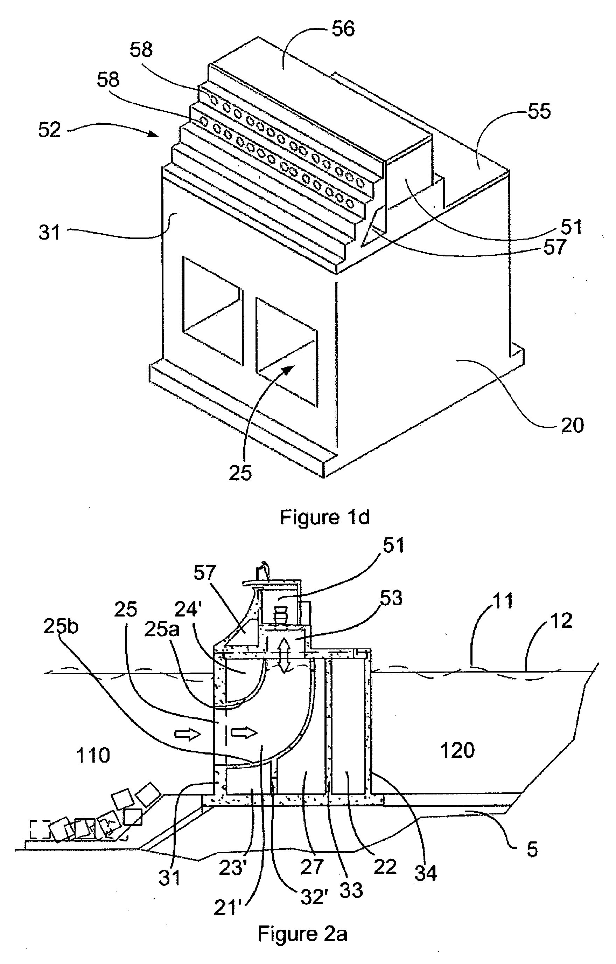

Figure 1 a illustrates a cross-sectional view of a first embodiment of a caisson breakwater module 100. The breakwater module has an upwave side 110, from which the waves strike upon the module and a downwave side 120, where the sea will generally be calmer. On the downwave side 120, e.g. a port or harbour may be located. The breakwater module may thus form a protective barrier for the port and any boats present in the port.

Reference sign 12 indicates the water level, whereas reference sign 11 indicates the height of the waves. The module comprises a base 20 installed on sea bed 5. A lid 50 may be placed on top of the base to form the breakwater module 100.

An Oscillating Water Column (OWC) is provided in the breakwater module. The OWC may comprise a substantially horizontal water inlet 25. Water enters through the inlet, and due to the sea's wave action, a water column will oscillate in water oscillation chamber 21. The oscillating water column causes an oscillating air flow through air chamber 53, through turbine 60 located in turbine chamber 51 and through a plurality of air ducts 58.

According to an advantageous embodiment of the present invention, the air ducts 58 may have openings on the upwave side of the breakwater module. Any noise created by the moving air will thus generally be expelled towards the sea, and much less towards the port (or coast).

Further foreseen on the breakwater module 100 is a breakwater section 52 on the upwave side. In this embodiment, the breakwater section 52 has a substantially staggered cross-section. A plurality of air duct outlets may be foreseen on the stepped structure of the breakwater section 52. The breakwater module 100 also comprises a substantially sealed chamber 57 which may house e.g. electrical converters electrically connected to the generator driven by turbine 60. The sealed chamber 57 may house any further electrical or electronic equipment. The sealed chamber 57 can be considered a "dry" chamber within the module, since it is substantially sealed from the water, as there is no direct connection with either the water oscillation chamber 21 or the turbine chamber 60, or the air ducts 58. With a proper conversion, the electricity generated and converted may be injected directly into the electrical grid.

Optionally valve systems may be provided e.g. between the water oscillation chamber and the air chamber and/or between the air chamber and the turbine chamber and/or in the air ducts. These valve systems may protect the turbine during high waves and storms.

On top of the turbine chamber 51, a generally flat top surface 56 is provided which may be adapted to be used as a promenade. Substantially on the downwave side of the module, on a rear section of the lid another flat surface 55 may be used as a road. If a plurality of modules is attached side-by-side, a promenade respectively a road may be formed. Traffic is thus made possible around the port by the caisson breakwater module, which furthermore generates electricity e.g. for its use in the port.

The base 20 thus defines a water inlet on the upwave side and a water oscillation chamber, and the lid defines a breakwater section on the upwave side, a turbine chamber, one or more air ducts connected with said turbine chamber and an additional substantially sealed chamber.

Base 20 comprises a front wall 31, a rear wall 34, and a first and second intermediate walls 32 and 33. First and second intermediate walls 32 and 33 substantially delimit the water oscillation chamber 21. Front ballast cells 23 and 24 are thus defined between front wall 31 and first intermediate wall 32. The front ballast cells may be filled with e.g. sand, rubble, rocks, or concrete. Similarly, a rear ballast cell 22 is defined between the second intermediate wall 22 and rear wall 34. The rear ballast cell may also be filled with any kind of ballast. The base 25 may thus be manufactured in dry docks, towed

(floatingly) to its installation site, and locally sunk. Preferably, the base may have a sufficient weight such that it is fixed in position on the sea bottom through its weight alone, without the need of any additional fixation means. The water inlet 25 is defined in this embodiment as a through-hole through the front ballast cells 23 and 24.

With reference to figures 1b and 1c, the method of filling the ballast cells may be understood. Figure 1b shows a cross-sectional view along line A-A of figure 1a, whereas figure 1c shows a top view of base 20. In figure 1b, front wall 31, rear wall 34 and the intermediate walls 32 and 33 may be recognized. A wall 21 c dividing the water oscillation chamber 21 into two separate chambers 21 a and 21 b may be foreseen. It should be noted that a similar separation into two separate sections may or may not be foreseen in the air chamber 53. Similarly, a single module will preferably comprise a single turbine 60, but in accordance with circumstances may comprise also two turbines.

From figures 1b and 1c, it can be readily seen that the rear ballast cell 22 may easily be filled with ballast from the top, once the base 20 is sunk onto the seabed 5. In order to fill lower front ballast cell 23, filling channels 26a, 26c and 26b are foreseen in respectively the modules side-walls and wall 21 c.

Figure 1d shows an isometric view of the first embodiment of the caisson breakwater module just described. In a possible implementation, a plurality of said modules may be positioned next to each other to form a breakwater structure protecting a coast or a port. A plurality of OWC's may thus be provided as well. In another implementation, one or more of the previously described modules may be added to an already existing breakwater structure to locally generate electricity. In a further example, a number of modules according to the invention may be combined with a number of prior art modules, not comprising an OWC.

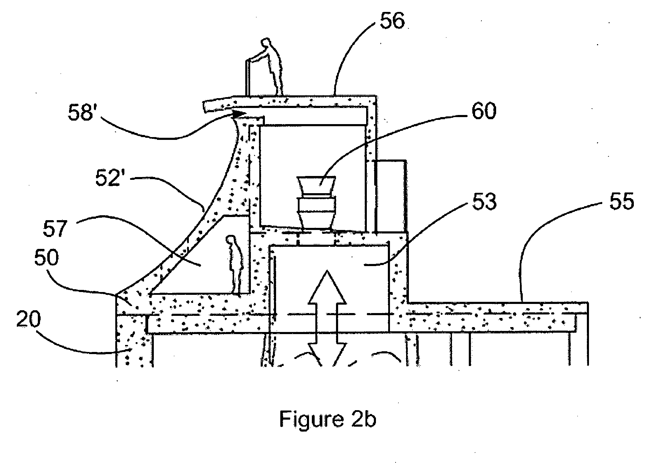

Figures 2a - 2b show different views of a module according to a second embodiment. The same components as previously described are denoted using the same reference signs. The module according to this second embodiment has a number of differences with respect to the first module.

Firstly, the breakwater section 52' comprises a substantially curved outer surface to deflect the waves. Also, the outlet(s) of the one or more air duct(s) 58' may in this embodiment be arranged between the top of the breakwater section 52' and the top of the lid. In this embodiment, a single outlet expending substantially over the entire width of the module may be foreseen.

Secondly, the water oscillation chamber 21' is delimited by curved walls 25a and 25b extending between the water inlet 25 and the air chamber 53. With respect to the base, an additional central ballast cell 27 may be foreseen according to this embodiment. The shapes of front ballast cells 23' and 24' are changed due to the curved water oscillation chamber 21'.

The curved oscillation chamber according to this embodiment is able to use both the horizontal and the vertical component of the wave action. Further, the mouth of the water oscillation chamber 21' breathing into air chamber 53 may be of smaller cross-section than the water inlet 25 at the other end of the chamber 21'. Hereby, the water pressure and air pressure of the air passing through the turbine may be increased.

A further difference with respect to the embodiment of figure 1 is that there is no clear separation between an air chamber and water oscillation chamber. In the module according to this embodiment, the air chamber and water oscillation chamber substantially form a single united chamber.

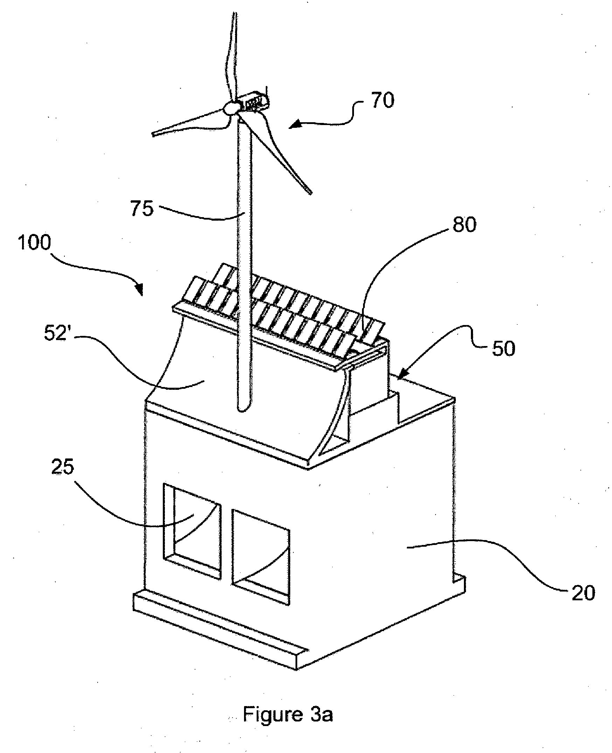

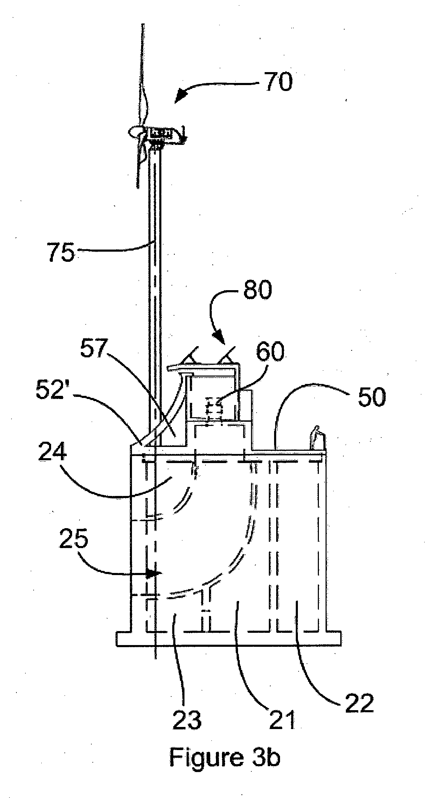

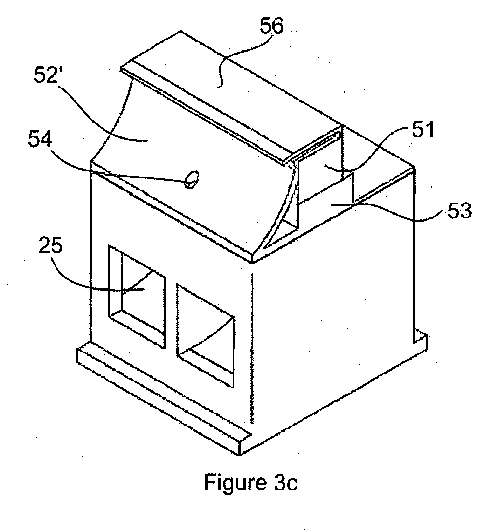

Figures 3a - 3c illustrate various views of a module according to a third embodiment. Figures 3a and 3c show isometric views, whereas figure 3b shows a cross-sectional view. In this embodiment, a promenade and/or road substantially above the turbine chamber may be dispensed with. Instead, the focus of the design of the third embodiment is to improve the (renewable) electricity generation of the breakwater structure.

To this end, a wind turbine 70 with a pole 75 may be provided. The mounting hole 54 for pole 75 may be foreseen on breakwater section 52'. Further, a plurality of photovoltaic panels 80 may be provided on top of the lid, e.g. on top of the turbine chamber. In accordance with figure 3b, the flat surface of the rear section of the lid may be configured as a promenade. Alternatively, this area could be used as a road. In yet another alternative, this available surface may also be used for installing (more) photovoltaic panels.

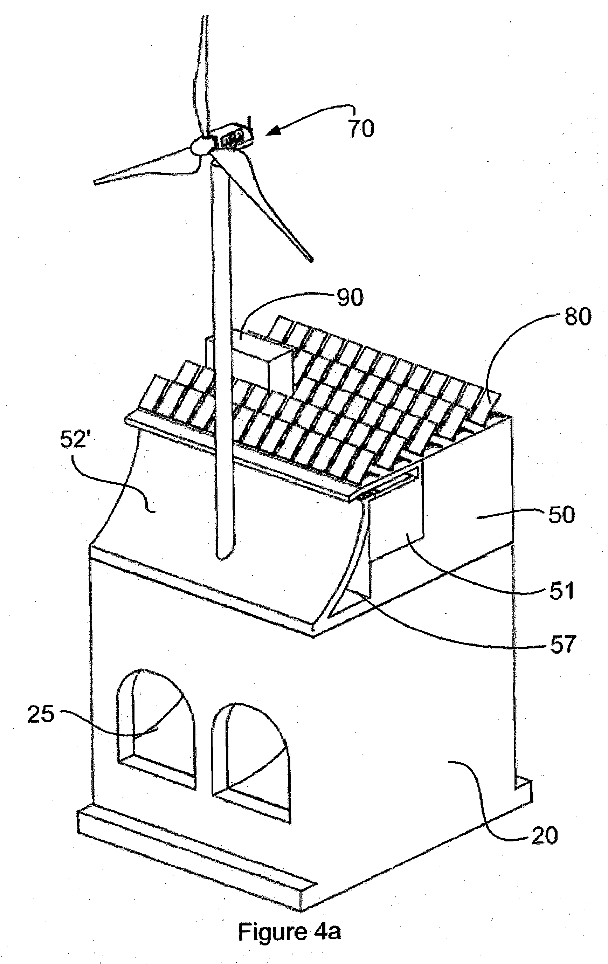

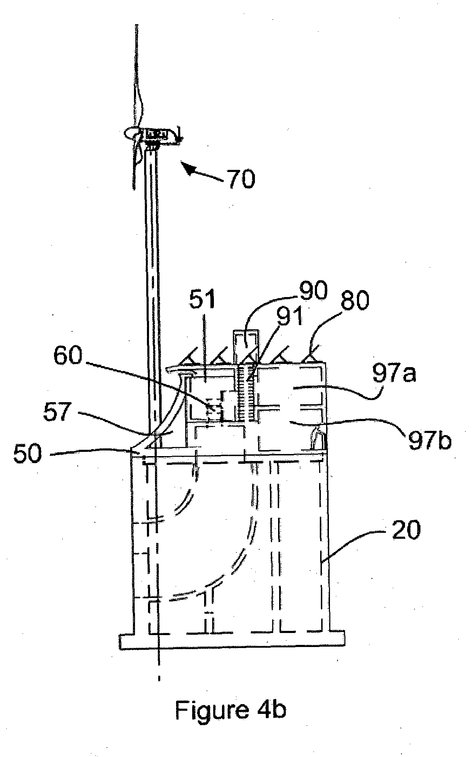

Figures 4a - 4d illustrate various views of a module according to a fourth embodiment. Similar components have once again been indicated with the same reference signs. From figure 4a, the sealed chamber 57, turbine chamber 51, water inlet 25, and wind turbine 70 are readily recognizable. Contrary to previously shown embodiments, the rear lid section behind the turbine chamber is not a substantially flat surface on top of base 20. Instead, in this embodiment, a covered space 97 underneath the deck is provided. This space may be substantially closed or open towards the sea. The covered space 97 may be divided into separate chambers 97a and 97b. These chambers may potentially serve many different purposes.

In the particular embodiment shown, the chambers are used for housing a desalination and water storage system. Desalination machinery 99 may be housed in chamber 97a. Fresh water resulting from the desalination process may be stored in chamber 97b. This fresh water may be used locally , e.g. in a port located on the downwave side of the breakwater.

The complete deck of the module may be occupied by photovoltaic panels 80. Additionally, in this embodiment a wind turbine may be provided. An access 90 may be provided on deck level. Through the access 90, maintenance personnel may reach e.g. the turbine chamber and or the sealed chamber 57. Stairs 91 may be provided internally of the module to facilitate his access.

The water inlet 25 may have a slightly different shape in this embodiment. In order to better support the weight, the upper edge of the water inlet chamber may be substantially arch-shaped.

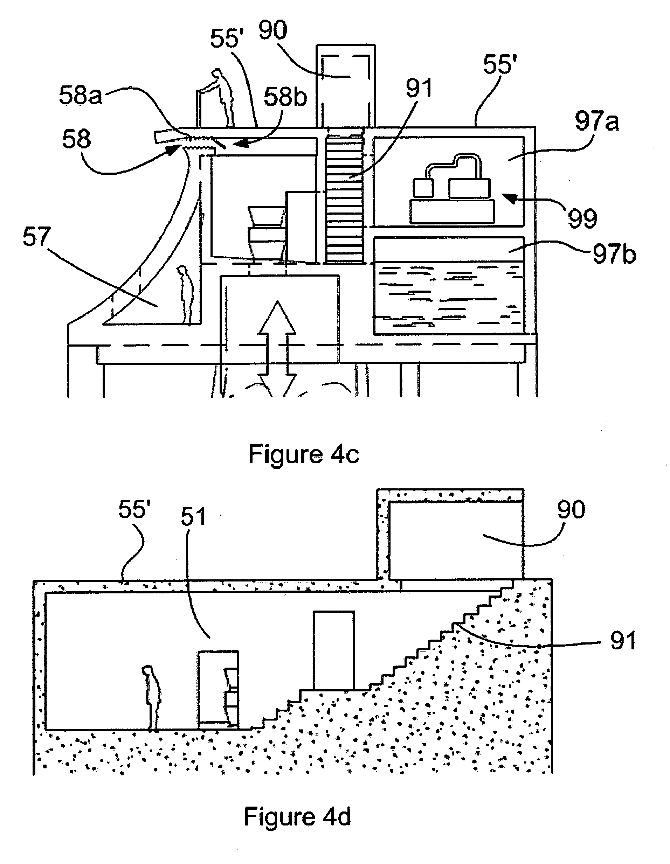

Another aspect of this embodiment may be seen in figure 4c. According to this aspect, a valve 58b to selectively close-off the air duct may be provided. During high waves and/or storms, the turbine chamber can thus be protected. A similar valve system may e.g. be implemented between the turbine chamber and the air chamber to protect the turbine from water during storms. Additionally in this embodiment, the air outlet 58a may comprise a sound-absorbing material and/or structure.

In accordance with figures 4c and 4d, instead of filling the decks with photovoltaic panels, these areas may also be used e.g. as a promenade.

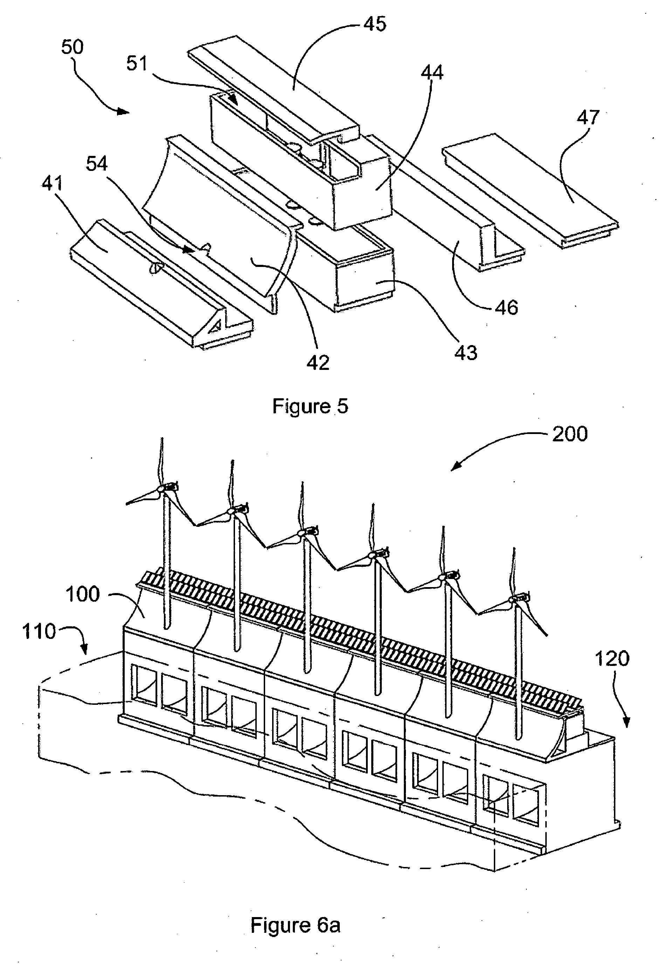

Figure 5 illustrates an example of a module according to an embodiment of the present invention comprising various moulded sections. Depending on the dimensions of the modules, transportation of e.g. the lid may become a problem.

It is possible to manufacture the lid as a single piece, but according to an aspect of the invention, the lid may also be split into separately moulded (reinforced) concrete sections. In this aspect, installation, transport and also manufacture may be facilitated. Figure 5 illustrates a possible division between various modules of the lid of a breakwater module. It will be clear that other divisions are possible.

In the shown embodiment, the breakwater section may be split in two sub-sections. A sub-section 41 defining the foot of the breakwater section and adapted to be fitted on top of the base 20. Sub-section 42 may comprise the substantially curved breakwater surface and is adapted to be attached to sub-section 41. Further, the air chamber may be a single moulded section 43. Similarly, the turbine chamber 44 may be a single moulded section 44, adapted to be positioned on top of the air chamber. Suitable positioning and fastening flanges may be provided on each of the sections.

A deck section 45 may be positioned on top of the section 44 forming the turbine chamber, such that between these two sections, the outlet of the air duct is formed. Finally, the rear lid section with a flat top surface may e.g. be split into two sub-sections 46 and 47.

In other embodiments, a different division may be provided. For example, the breakwater section may be made of a single moulded piece combining sub-sections 41 and 42. Alternatively or additionally, rear lid sub-sections 46 and 47 may also be joined in a single moulded piece.

It will be clear that in accordance with circumstances, the dimensions of the modules (lid and base) may be varied. In calmer seas, the length of the module (the dimension in the upwave-downwave direction) may be smaller. Whereas in occasions where more coastal protection is required due to e.g. higher wave intensity, the module may be longer. Accordingly, the space available behind the turbine chamber, and thus also its practical uses may vary. In some embodiments of the invention, even no space may be available behind the turbine chamber.

Also, in accordance with wave characteristics of the sea (e.g. wave length, frequency, and height), the dimensions of e.g. the water oscillation chamber, water inlet and turbine may be adjusted.

A plurality of the modules, according to any of the shown embodiments, may be used to build a new breakwater structure. Figure 6a illustrates such a use of a plurality of caisson breakwater modules 100. In some cases, these may be used to build e.g. a port on the downwave side 120, wherein the modules serve for docking ships. In other cases, they may serve mostly or only for coastal protection.

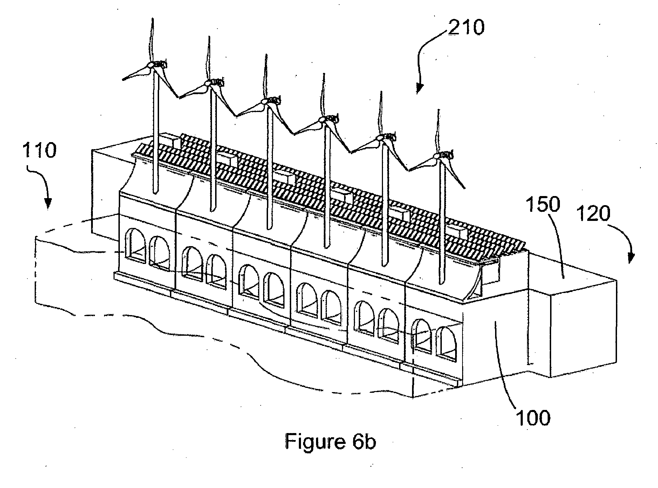

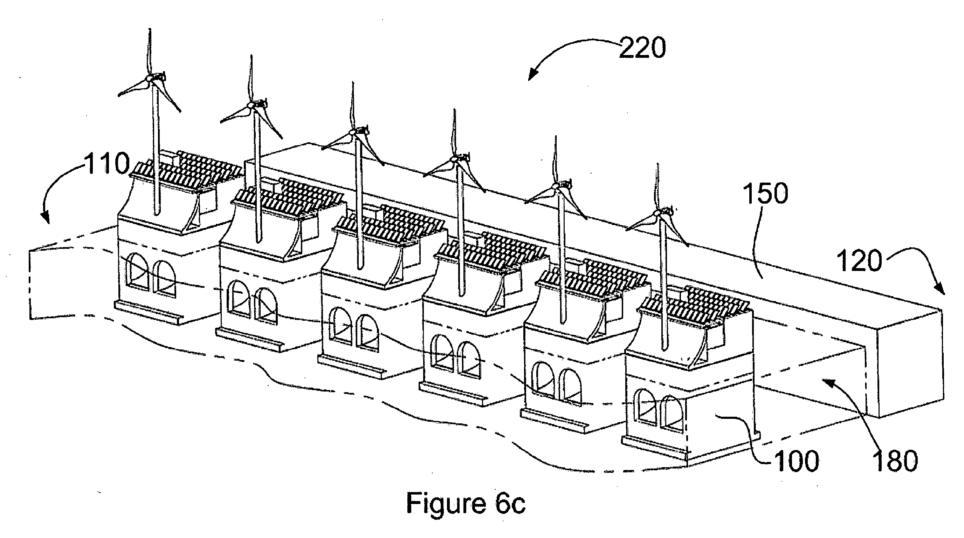

In other possible implementations, illustrated in figures 6b and 6c, a number of these modules may be added to an already existing breakwater structure. According to the embodiment of figure 6b, modules 100 may be attached directly at the upwave side of pre-existing breakwater structure 150. This may be useful e.g. to provide renewable electricity and may form a reinforcement of the breakwater structure. The modules may be attached side-by-side or a gap may be provided between neighbouring modules.

In figure 6c, a plurality of modules 100 is installed in front of a pre-existing breakwater structure 150. A gap 180 of e.g. a few metres may be foreseen. In order to access the machinery of the Oscillating Water Columns, a gangway may be arranged between breakwater structure 150 and each of the modules 100. Similarly, a gangway or similar structure may be provided for connection of electricity cables from modules 100 to the shore.

In each of the embodiments of figures 6a - 6c, the modules used are generally identical. It will be clear however, that in any of these implementations, the kind of module used may be varied (e.g. some may have photovoltaic panels, whereas others do not. Or some may comprise desalination machinery, whereas others may comprise a wind turbine).

Generally, all shown embodiments, take advantage of the modular approach of the caisson breakwater. Further, the separation of base and lid may facilitate manufacture transport and installation. Additionally, the combination of energy conversion and coastal protection is beneficial. Furthermore, access and maintenance of the installations are facilitated. No submarine cables are needed in any of the embodiments for transporting electricity to the shore. And with the provision of the sealed chamber and turbine chamber, a beneficial optimization of space is acquired. In combination a very cost-effective design for various types of breakwaters is achieved.

In some of the shown embodiments, renewable electricity generation may be prioritized and combinations using wind energy, wave energy and solar energy are possible.

Although only a number of particular embodiments and examples of the invention have been disclosed herein, it will be understood by those skilled in the art that other alternative embodiments and/or uses of the invention and obvious modifications are possible. Thus, the scope of the present invention should not be limited by particular embodiments, but should be determined only by a fair reading of the claims that follow.

## Claims

1. A caisson breakwater module (100) having an upwave (110) and a downwave side (120) and incorporating an oscillating water column,
the caisson breakwater (100) comprising a base (20) installed on the sea bed (5) and a lid (50) adapted to be positioned on top of said base (20) substantially above mean sea level,
the base (20) comprising a bottom, a front wall (31), a rear wall (34), and one or more intermediate walls (32) between the front wall (31) and the rear wall (34), the walls extending upwards from the bottom, and
the base (20) defining a water inlet (25) below the sea level on the upwave side and further defining a water oscillation chamber (21), and
the lid (50) defining a breakwater section (52) on the upwave side, a turbine chamber (51), one or more air ducts (58) connected with said turbine chamber (51) and
an additional substantially sealed chamber (57) is incorporated in the lid (50), wherein the lid (50) further defines an air chamber (53) below the turbine chamber (51) and comprises an opening for allowing communication between the water oscillation chamber (21) and the air chamber (53), and further comprising a valve in said opening for selectively closing off communication between the water oscillation chamber (21) and the air chamber (53), wherein the sealed chamber (57) is located substantially between the air chamber (53) and the breakwater section (52).

2. A module according to claim 1, wherein the base (20) has one or more ballast cells (22, 23, 24) defined between the walls.

3. A module according to any of claims 1 - 2, wherein the sealed chamber (57) houses an electrical converter.

4. A module according to any of claims 1 - 3, wherein the base (20) comprises a rear base section behind the water oscillation chamber (21) on the downwave side, and wherein the lid (50) comprises a rear lid section with a substantially flat top surface (56) extending behind the water oscillation chamber (21), and
wherein said flat top surface (56) of the rear lid section is suitable for being used as a road.

5. A module according to any of claims 1 - 4, wherein the lid (50) comprises a central section having a substantially flat top surface (56) extending in a downwave direction from the top of the breakwater section (52), and
wherein said top surface (56) of the central section comprises a promenade.

6. A module according to any of claims 1 - 5, wherein one or more air ducts (58) have an opening on the breakwater section (52).

7. A module according to any of claims 1 - 6, wherein said breakwater section (52) has either a substantially continuously curved outer surface or a staggered outer surface.

8. A module according to any of claims 1 - 7, wherein one or more of said air ducts (58) comprise a valve for selectively closing off the air duct.

9. A module according to any of claims 1 - 8, wherein one or more of said air ducts (58) may comprise a sound absorbing material and/or a sound absorbing structure.

10. A module according to any of claims 1 - 9, wherein the lid (50) comprises a plurality of moulded concrete sections.

11. A module according to any of claims 1 - 10, further comprising a wind turbine (70) and/or one or more photovoltaic panels (80).

12. A module according to any of claims 1 - 11, further comprising a desalination plant and a storage chamber for storing fresh water defined by the lid and on the downwave side of the oscillating water column.

13. A module according to any of claims 1 - 12, wherein the cross-section of the water inlet (25) is larger than the cross-section of the oscillation chamber (21) at its other end.

14. A breakwater comprising a plurality of modules according to any of claims 1 - 13

## Patentansprüche

1. Ein Sankkasten-Wellenbrechermodul (100), das eine Aufwellenseite (110) und eine Abwellenseite (120) hat und das eine schwingende Wassersäule miteinbezieht,
wobei der Sankkasten-Wellenbrecher (100) einen Fuß (20) umfasst, der auf dem Meeresboden (5) montiert ist und einen Deckel (50) umfasst, der angepasst ist, um auf dem Oberteil des Fußes (20) im Wesentlichen oberhalb des mittleren Meeresspiegels angeordnet zu werden,
wobei der Fuß (20) einen Boden, eine vordere Wand (31), eine hintere Wand (34), und eine oder mehrere mittlere Wände (32) zwischen der vorderen Wand (31) und der hinteren Wand (34) umfasst, wobei sich die Wände aufwärts vom Boden heraus erstrecken, und
wobei der Fuß (20) einen Wassereinlass (25) unterhalb des Meeresspiegels an der Aufwellenseite definiert und weiterhin eine Wasserschwingungskammer (21) definiert, und
wobei der Deckel (50) einen Wellenbrecherabschnitt (52) an der Aufwellenseite, eine Turbinenkammer (51), eine oder mehrere mit der Turbinenkammer (51) verbundene Luftkanäle (58) definiert und
wobei eine weitere im Wesentlichen abgedichtete Kammer (57) in dem Deckel (50) miteinbezogen ist, wobei der Deckel (50) weiterhin eine Luftkammer (53) unterhalb der Turbinenkammer (51) definiert und eine Öffnung umfasst, welche die Verbindung zwischen der Wasserschwingungskammer (21) und der Luftkammer (53) ermöglicht und weiterhin umfassend ein in der Öffnung angeordnetes Ventil, um selektiv die Verbindung zwischen der Wasserschwingungskammer (21) und der Luftkammer (53) abzusperren,
wobei die abgedichtete Kammer (57) im Wesentlichen zwischen der Luftkammer (53) und dem Wellenbrecherabschnitt (52) angeordnet ist.

2. Ein Modul nach Anspruch 1, wobei der Fuß (20) eine oder mehrere zwischen den Wänden definierte Ballastzellen (22, 23, 24) hat.

3. Ein Modul nach einem der Ansprüche 1 - 2, wobei in der abgedichteten Kammer (57) einen elektrischen Konverter eingebaut ist.

4. Ein Modul nach einem der Ansprüche 1 - 3, wobei der Fuß (20) einen hinteren Fußabschnitt hinter der Wasserschwingungskammer (21) an der Abwellenseite umfasst, und wobei der Deckel (50) einen hinteren Deckelabschnitt mit einer im Wesentlichen flachen Deckfläche (56), die sich hinter der Wasserschwingungskammer (21) erstreckt, umfasst und
wobei die flache Deckfläche (56) des hinteren Deckelabschnitts geeignet ist, um als Fahrstraße benutzt zu werden.

5. Ein Modul nach einem der Ansprüche 1 - 4, wobei der Deckel (50) einen mittleren Abschnitt umfasst, der eine im Wesentlichen flache Deckfläche (56) hat, die dich in einer Abwellenrichtung von dem Oberteil des Wellenbrecherabschnitts (52) hinaus erstreckt, und
wobei die Deckfläche (56) des mittleren Abschnitts eine Promenade umfasst.

6. Ein Modul nach einem der Ansprüche 1 - 5, wobei ein oder mehrere Luftkanäle (58) eine Öffnung in dem Wellenbrecherabschnitt (52) haben.

7. Ein Modul nach einem der Ansprüche 1 - 6, wobei der Wellenbrecherabschnitt (52) entweder eine im Wesentlichen kontinuierlich gekrümmte äußere Oberfläche oder eine abgestufte äußere Oberfläche hat.

8. Ein Modul nach einem der Ansprüche 1 - 7, wobei einer oder mehrere der Luftkanäle (58) ein Ventil umfassen, um den Luftkanal selektiv abzusperren.

9. Ein Modul nach einem der Ansprüche 1 - 8, wobei eine oder mehrere der Luftkanäle (58) ein schalldämpfendes Material und/oder eine schalldämpfende Struktur umfassen können.

10. Ein Modul nach einem der Ansprüche 1 - 9, wobei der Deckel (50) eine Vielzahl von geformten Betonabschnitten umfasst.

11. Ein Modul nach einem der Ansprüche 1 - 10, weiterhin umfassend eine Windturbine (70) und/oder ein oder mehrere Photovoltaikmodule (80).

12. Ein Modul nach einem der Ansprüche 1 - 11, weiterhin umfassend eine Entsalzungsanlage und eine Lagerkammer zur Lagerung von Süßwasser, welche durch den Deckel definiert ist und an der Abwellenseite der schwingenden Wassersäule angeordnet ist.

13. Ein Modul nach einem der Ansprüche 1 - 12, wobei das Querprofil des Wassereinlasses (25) größer als das Querprofil der Schwingungskammer (21) an deren anderem Ende ist.

14. Ein Wellenbrecher umfassend eine Vielzahl von Modulen nach einem der Ansprüche 1 - 13.

## Revendications

1. Un module (100) de brise-lames en caisson ayant un côté en amont (110) des lames et un côté en aval (120) des lames et incorporant une colonne d'eau oscillante,
comprenant le brise-lames en caisson (100) une base (20) installée sur le fond de la mer (5) et un couvercle (50) adapté pour être positionné sur ladite base (20) essentiellement au-dessus du niveau moyen de la mer,
comprenant la base (20) un fond, une paroi frontale (31), une paroi arrière (34), et un ou plusieurs parois moyennes (32) entre la paroi frontale (31) et la paroi arrière (34), s'étendant les parois vers le haut à partir du fond, et
définissant la base (20) une entré d'eau (25) au-dessous du niveau de la mer dans le côté en amont des lames et définissant en outre une chambre d'oscillation d'eau (21), et
définissant le couvercle (50) une section brise-lames (52) dans le côté en amont des lames, une chambre de turbine (51), un ou plusieurs conduits d'air (58) connectés avec ladite chambre de turbine (51) et
étant une chambre essentiellement hermétique (57) additionnelle incorporée dans le couvercle (50), dans lequel le couvercle (50) définit en outre une chambre d'aire (53) au-dessous de la chambre de turbine (51) et il comprend une ouverture pour permettre la communication entre la chambre d'oscillation d'eau (21) et la chambre d'air (53) et comprenant en outre une soupape dans ladite ouverture pour fermer de façon sélective la communication entre la chambre d'oscillation d'eau (21) et la chambre d'air (53),
dans lequel la chambre hermétique (57) est située essentiellement entre la chambre d'air (53) et la section brise-lames (52).

2. Un module selon la revendication 1, dans lequel la base (20) a une ou plusieurs cellules de ballastage (22, 23, 24) définies entre les parois.

3. Un module selon l'une quelconque des revendications 1 - 2, dans lequel la chambre hermétique (57) contient un convertisseur électrique.

4. Un module selon l'une quelconque des revendications 1 - 3, dans lequel la base (20) comprend une section de base arrière située derrière la chambre d'oscillation d'eau (21) dans le côté en aval des lames, et dans lequel le couvercle (50) comprend une section de couvercle arrière avec une surface supérieure (56) essentiellement plate s'étendant derrière la chambre d'oscillation d'eau (21), et
dans lequel ladite surface supérieure (56) plate de la section de couvercle arrière est adaptée à être utilisée en tant qu'une route.

5. Un module selon l'une quelconque des revendications 1 - 4, dans lequel le couvercle (50) comprend une section centrale ayant une surface supérieure (56) essentiellement plate s'étendant dans une direction en aval des lames à partir du sommet de la section brise-lames (52), et
dans lequel ladite surface supérieure (56) de la section centrale comprend une promenade.

6. Un module selon l'une quelconque des revendications 1 - 5, dans lequel un ou plusieurs conduits d'air (58) ont une ouverture dans la section brise-lames (52).

7. Un module selon l'une quelconque des revendications 1 - 6, dans lequel ladite section brise lames (52) a ou bien une surface extérieure courbée de façon essentiellement continue ou bien une surface extérieure échelonnée.

8. Un module selon l'une quelconque des revendications 1 - 7, dans lequel une ou plusieurs desdits conduits d'air (58) comprennent une soupape pour fermer de façon sélective le conduit d'air.

9. Un module selon l'une quelconque des revendications 1 - 8, dans lequel un ou plusieurs desdits conduits d'air (58) peuvent comprendre un matériau d'absorption acoustique et/une structure d'absorption acoustique.

10. Un module selon l'une quelconque des revendications 1 - 9, dans lequel le couvercle (50) comprend une pluralité de sections de béton moulées.

11. Un module selon l'une quelconque des revendications 1 - 10, comprenant en outre une éolienne (70) et/ou un ou plusieurs panneaux photovoltaïques (80).

12. Un module selon l'une quelconque des revendications 1 - 11, comprenant en outre une usine de dessalement et une chambre de stockage pour stocker de l'eau douce définie par le couvercle et située dans le côté en aval des lames de la colonne d'eau oscillante.

13. Un module selon l'une quelconque des revendications 1 - 12, dans lequel la section transversale de l'entrée d'eau (25) est plus grande que la section transversale de la chambre d'oscillation (21) à son autre extrémité.

14. Un brise-lames comprenant une pluralité de modules selon l'une quelconque des revendications 1 - 13.
